# EUROPEAN PATENT SPECIFICATION

(11) **EP 3 032 630 B1**
(45) Date of publication and mention of the grant of the patent: **28.03.2018**
(21) Application number: 14833692.8
(22) Date of filing: 03.07.2014
(51) Int. Cl.: H01M 8/0267, H01M 8/0247, H01M 8/1018

(54) **DEFORMATION ABSORBING MEMBER AND FUEL CELL**
VERFORMUNGSABSORBIERENDES ELEMENT UND BRENNSTOFFZELLE
ÉLÉMENT D'ABSORPTION DE DÉFORMATIONS ET PILE À COMBUSTIBLE

(30) Priority: 05.08.2013 JP 2013162542
(43) Date of publication of application: 15.06.2016
(73) Proprietor: NISSAN MOTOR CO., LTD., Yokohama-shi, Kanagawa 220-8623 (JP)
(72) Inventor: HORAI, Atsushi, Atsugi-shi Kanagawa 243-0123 (JP)
(74) Representative: Hoefer & Partner Patentanwälte mbB
(86) International application number: PCT/JP2014/067830
(87) International publication number: WO 2015/019764

(56) References cited:
- EP-A1- 3 026 742
- JP-A- H05 335 024
- JP-A- H06 290 797
- JP-A- 2001 068 132
- JP-A- 2003 109 648
- JP-A- 2006 318 863
- JP-A- 2012 129 108
- JP-A- 2013 097 982
- US-A1- 2009 136 805

## Description

### TECHNICAL FIELD

The present invention relates to a separator unit comprising a deformation absorbing member and a fuel cell provided with the separator unit.

### BACKGROUND

Conventionally, a fuel cell is constructed by stacking a plurality of a membrane electrode assembly and a separator alternately. The separator laminated on at least one side of the membrane electrode assembly is constituted by a separator unit composed of an anode side separator and a cathode side separator with a deformation absorbing member interposed therebetween. The deformation absorbing member is intended to absorb the deformation along the stacking direction of the membrane electrode assembly and the separator. By disposing a spring-like deformation absorbing member inside the fuel cell stack, the deformation of the laminated members is absorbed (for example, see Patent Document 1.).

The fuel cell is constructed by accommodating within a housing a plurality of membrane electrode assemblies and a plurality of separators stacked or laminated on one another alternately. Since the fuel cell can obtain a high output in accordance with the number of laminated layers of the membrane electrode assembly, it is desirable to increase the number of laminated layers of the membrane electrode assembly.

Incidentally, since the membrane electrode assembly generates heat due to power generation, cooling water is circulated through between the anode side separator and the cathode side separator. When the volume of cooling water circulation varies due to the deformation absorbing member, for example, since the membrane electrode assembly is not sufficiently cooled, for example, a water system required for circulation of the cooling water will be complicated. Therefore, it is necessary for the deformation absorbing member disposed between the anode side separator and the cathode side separator so as not to interfere with the flow of cooling water while absorbing the deformation along the stacking direction of the membrane electrode assembly and the separator.

### PRIOR ART REFERENCES

### PATENT DOCUMENT

Patent Document 1: JP 2012-129108 JP

JP2006318863A discloses a fuel cell comprising a intermediate plate for distributing a cooling medium in a separator. JPH06290797A discloses a layer built fuel cell comprising an edge plate that is formed in a flexible structure. US2009136805A1 discloses a fuel cell including a porous element, a first electrode, and a separator. JP2013097982A discloses a fuel cell stack with a reduced pressure loss in a cooling fluid circulation passage. **SUMMARY OF THE INVENTION**

### PROBLEM TO BE SOLVED BY THE INVENTION

Thus, there has been requested to provide a deformation absorbing member and a fuel cell provided with such a deformation absorbing member, which suppresses fluctuations in the volume of the cooling water between the anode side separator and the cathode side separator such that the circulation of the cooling water is maintained well without biasing the flow of the cooling water.

The present invention has been made to solve the above problem, and it is an object of the present invention provides a deformation absorbing member which can suppress the volume variations of the cooling medium (e.g. cooling water) between the anode side separator and the cathode side separator and to improve the circulation. Furthermore, it is another object to provide a fuel cell provided with such a deformation absorbing member.

### MECHANISM FOR SOLVING THE PROBLEM

The problem is solved by a separator unit according to any of the independent claims. The deformation absorbing member according to the present invention is used for achieving the above object by being laminated or stacked between an anode side separator and a cathode side separator assembled in pairs so as to absorb each deformation of the stacked members of the fuel cell. The deformation absorbing member comprises an absorbing portion for absorbing the variation of the in-plane distribution of the stress associated with the deformation of the stacked members along the stacking direction. The absorbing portion includes a plurality of deformable protruding portions which protrude in a grid from one surface of a substrate along the stacking direction. One protruding portion and the other protruding portion are located adjacent to each other with respect to upstream side and downstream side of one circulation direction of a cooling medium to be circulated between the anode side separator and the cathode side separator, while being partly different in positions with respect to the other circulation direction crossing the one circulation direction. The protruding portion consists of a cantilevered beam portion which is erected from the one surface of the substrate. When the erected piece is deformed by being pressed by the stacking members beyond a predetermined range, the free end portion extending along the one circulation direction from the fixed end portion positioned on the one surface of the substrate is brought into contact with either the cathode side separator or the anode side separator.

Further, the deformation absorbing member according to the present invention is used for achieving the above object by being laminated or stacked between an anode side separator and a cathode side separator assembled in pairs so as to absorb each deformation of the stacked members of the fuel cell. The deformation absorbing member comprises an absorbing portion for absorbing the variation of the in-plane distribution of the stress associated with the deformation of the stacked members along the stacking direction. A plate-shaped holding member is provided which is brought into contact with the other surface of the substrate, which faces the one surface. A plurality of the absorbing portions are provided including deformable protruding portions protruding in a grid from the one surface of the substrate along the stacking direction, and restricting portions protruding from the one surface of the substrate along the stacking direction and dimensioned short in the stacking direction for restricting deformation of the stacked member within a predetermined range along the stacking direction.

In order to achieve the above object, a fuel cell according to claim 7 is provided with a deformation absorbing member, a separator unit, a membrane electrode assembly, and housing. The deformation absorbing member is composed of a structure described above. In the separator unit, the deformation absorbing member is stacked between the anode side separator and the cathode side separator. The membrane electrode assembly is stacked on the separator unit and generates electric power using fuel media supplied. The housing holds the deformation absorbing member, the separator unit, and the membrane electrode assembly integrally.

### BRIEF DESCRIPTION OF THE DRAWINGS

FIG. 1 is a perspective view of a fuel cell provided with a deformation absorbing member according to a first embodiment;
FIG. 2 is an exploded perspective view showing an exploded view of a part of the fuel cell with each component dissembled, which is provided with a deformation absorbing member according to the first embodiment;
FIG. 3 is a sectional view showing a main portion of the fuel cell from the side, which is provided with a deformation absorbing member according to the first embodiment;
FIG. 4 is a perspective view showing a part of the deformation absorbing member according to the first embodiment;
FIG. 5 is a plan view showing a part of the deformation absorbing member according to the first embodiment;
FIG. 6 is a side view schematically showing a part of the deformation absorbing member according to the first embodiment;
FIG. 7 is a perspective view showing a part of the deformation absorbing member according to a first modification of the first embodiment;
FIG. 8 is a perspective view showing a part of the deformation absorbing member according to a second modification of the first embodiment;
FIG. 9 is a plan view showing a part of the deformation absorbing member according to the second modification of the first embodiment;
FIG. 10 is a side view schematically showing a part of the deformation absorbing member according to a second modification of the first embodiment;
FIG. 11 is a side view schematically showing the spring characteristics of an erected piece of the deformation absorbing member according to a second modification of the first embodiment;
FIG. 12 is a perspective view showing a part of the deformation absorbing member according to a second embodiment;
FIG. 13 is a plan view showing a part of the deformation absorbing member according to the second embodiment;
FIG. 14 is a side view schematically showing a part of the deformation absorbing member according to the second embodiment;
FIG. 15 is a perspective view showing a part of the deformation absorbing member according to a first modification of the second embodiment;
FIG. 16 is a plan view showing a part of the deformation absorbing member according to the first modification of the second embodiment;
FIG. 17 is a side view schematically showing a part of the deformation absorbing member according to the first modification of the second embodiment;
FIG. 18 is a perspective view showing a part of the deformation absorbing member according to a second modification of the second embodiment;
FIG. 19 is a plan view showing a part of the deformation absorbing member according to the second modification of the second embodiment;
FIG. 20 is a side view schematically showing a part of the deformation absorbing member according to the second modification of the second embodiment;
FIG. 21 is a perspective view showing a part of the deformation absorbing member according to a third modification of the second embodiment;
FIG. 22 is a plan view showing a part of the deformation absorbing member according to the third modification of the second embodiment; and
FIG. 23 is a side view schematically showing a part of the deformation absorbing member according to the third modification of the second embodiment.

### EMBODIMENTS OF THE INVENTION

Below, with reference to the accompanying drawings, a description is given of first and second embodiments according to the present invention. In the description of the drawings, the same element is denoted by the same reference numeral so as to omit redundant description. The size and proportion of the members in the drawings may be exaggerated for convenience of description such that those may be different from the actual size and proportion.

### (FIRST EMBODIMENT)

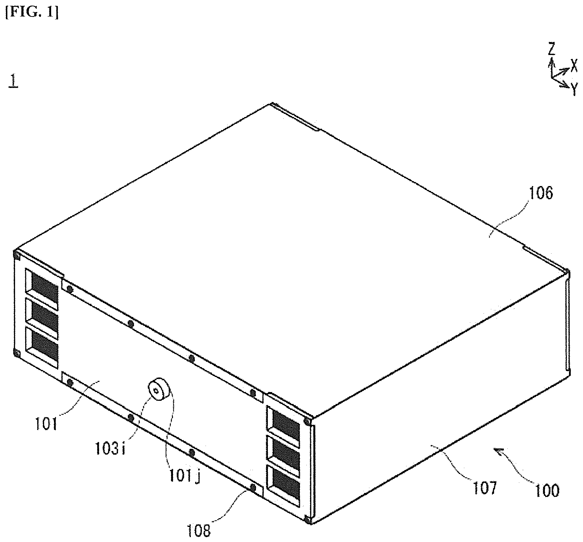

A description is given with reference to FIGS. 1 to 6 of a fuel cell 1 pertaining to a first embodiment provided with a deformation absorbing member 30 and of a fuel cell with its deformation absorbing member 30.

FIG.1 is a perspective view of a fuel cell 1 provided with a deformation absorbing member 30.

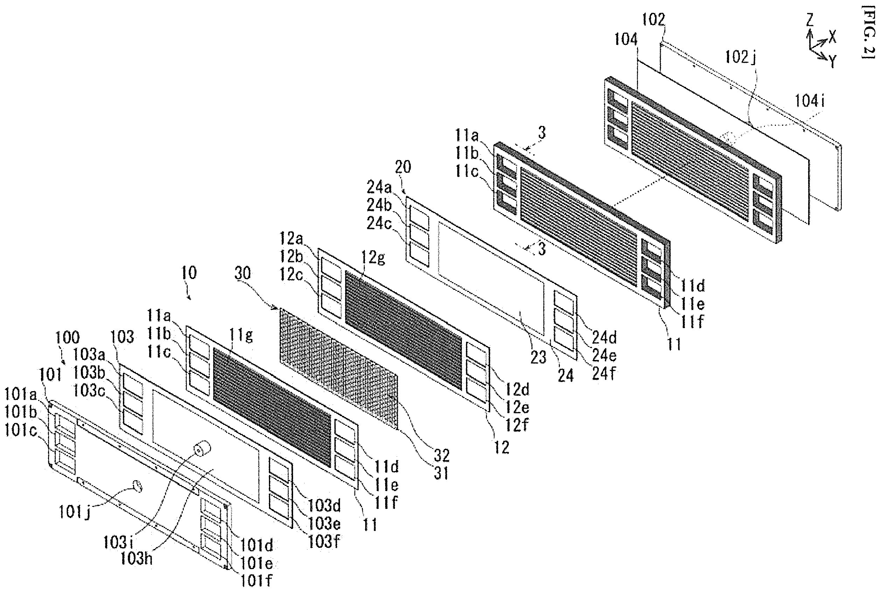

FIG. 2 is an exploded perspective view showing a part of the fuel cell 1 with each component dissembled, which is provided with a deformation absorbing member 30.

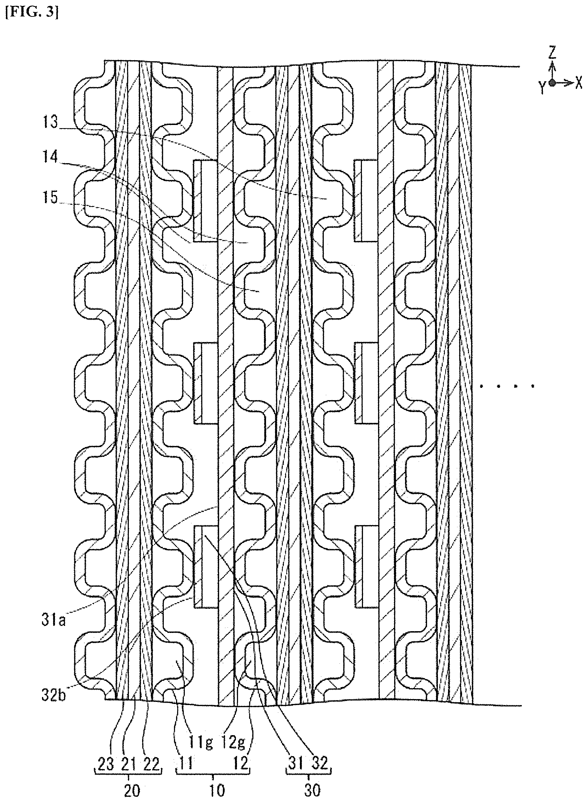

FIG. 3 is a sectional view showing a main portion of the fuel cell 1 from the side, which is provided with a deformation absorbing member 30.

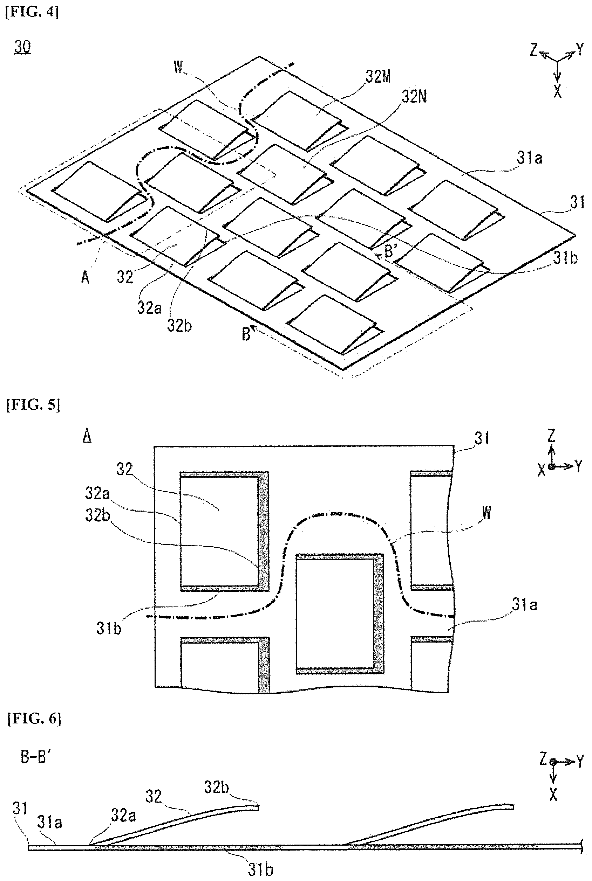

FIG. 4 is a perspective view showing a part of the deformation absorbing member 30.

FIG. 5 is a plan view showing a part of the deformation absorbing member 30 in the region A in FIG. 4.

FIG. 6 is a side view schematically showing a part of the deformation absorbing member 30 in a B-B' line in FIG. 4.

The deformation absorbing member 30 is used as a stacked member between an anode side separator 11 and a cathode side separator 12 that are assembled in pairs, and is intended to absorb deformations of each of the stacked members of the fuel cell 1 (for example, separator unit 10 composed of the pair of the anode side separator 11 and the cathode side separator 12, and a membrane electrode assembly 20). The deformation absorbing member 30 is provided with an absorbing portion for absorbing the variation of the in-plane distribution of the stress associated with the deformation along the stacking direction X of the stacked members.

In particular, the absorbing portion of the deformation absorbing member 30 pertaining to the first embodiment are provided with a plurality of deformable protruding portions (e.g. erected or upright pieces 32) which protrude in a grid along the stacking direction X from one surface 31a of the substrate 31. One protruding portion (corresponding to an erected piece 32M) and the other protruding portion (corresponding to the other erected portion 32N) are located adjacent to each other, i.e. one on the upstream side and the other on the downstream side of the cooling medium (for example, cooling water) in one circulation direction Y, which is circulated between the anode side separator 11 and the cathode side separator 12. The one protruding portion and the other protruding portion are disposed partly different in position with respect to the other circulation direction Z crossing the one circulation direction Y.

The fuel cell 1 is provided with the deformation absorbing member 30, the separator unit 10, the membrane electrode assembly 20, and the housing 100. The deformation absorbing member 30 is made of the above configuration. The separator unit 10 has the deformation absorbing member 30 stacked between the anode side separator 11 and the cathode side separator 12. The membrane electrode assembly (MEA) 20 is stacked on the separator unit 10, and generates power by using a fuel medium to be supplied. The housing 100 holds the deformation absorbing member 30, the separator unit 10, and the MEA 20, together.

The fuel cell 1 includes the separator unit 10, the membrane electrode assembly 20, the deformation absorbing member 30, and the housing 100. Below, a description is given of the respective components of the fuel cell 1 in order with reference to FIGS. 1 to 6.

The separator unit 10 is, as shown in FIGS. 2 and 3, stacked alternately with the membrane electrode assembly 20 to separate the adjacent membrane electrode assembly 20.

Specifically, the separator unit 10, while isolating the adjacent membrane electrode assemblies 20, is energized with power generated by the membrane electrode assembly 20 in the stacking direction X. The separator unit also circulates a fuel medium and a cooling fluid (for example, cooling water), respectively. The separator unit 10 is provided with an anode side separator 11 and a cathode side separator 12.

The anode side separator 11 is brought into contact with the anode 22 provided on one face of the membrane electrode assembly 20. The anode side separator 11 is made of a conductive metal material, and is formed in a thin plate with a size larger than the anode 22. The anode side separator 11 has through hole openings on one end in the longitudinal direction for anode gas supply port 11a, cooling fluid supply port 11b, and a cathode gas supply port 11c, respectively. Similarly , the anode gas separator 11 has through hole openings on the other end in the longitudinal direction corresponding to a cathode gas discharge port 11d, a cooling fluid discharge port 11e, and an anode gas discharge port 11f.

At the center of the anode side separator 11, as shown in FIG. 3, a plurality of projections are formed to constitute a plurality of flow channels 11g at regular intervals to allow a fuel gas (hydrogen) and a cooling water separately from each other. Among the projections, the anode side separator 11 uses a closed space formed by contacting the anode 22 as an anode gas flow channel 13 for supplying hydrogen to the anode 22. On the other hand, the anode side separator 11 uses the closed space formed by the deformation absorbing member 30 with respect to the cathode side separator 12 as cooling water flow channel 14 for supplying cooling water.

The cathode side separator 12 is brought into contact with a cathode 23 provided on the other face of the membrane electrode assembly 20. The cathode side separator 12 is made of a conductive metal material, and is formed in a thin plate larger in size than the cathode 23. The cathode side separator 12 has through hole openings, on one end in the longitudinal direction for anode gas supply port 12a, cooling fluid supply port 12b, and a cathode gas supply port 12c, respectively. Similarly, the cathode gas separator 12 has through hole openings, on the other end in the longitudinal direction, corresponding to a cathode gas discharge port 12d, cooling fluid discharge port 12e, and an anode gas discharge port 12f.

At the center of the cathode side separator 12, as shown in FIG. 3, a plurality of projections are formed to constitute a plurality of flow channels 12g at regular intervals to allow oxidant gas (air containing oxygen or pure oxygen) and a cooling water separately from each other. Among the projections, the cathode side separator 12 uses a closed space formed by contacting the cathode 23 as a cathode gas flow channel 15 for supplying an oxidant gas to the cathode 23. On the other hand, among the projections, the cathode gas separator 12 uses a closed formed via the deflection absorbing member 30 with respect to the cathode side separator 12 as a cooling water flow channel 14 for supplying cooling water. The cooling water flow channel 14 of the anode side separator 11 and the cooling water flow channel 14 provided on the cathode side separator 12 jointly form a single cooling water flow channel.

The membrane electrode assembly 20, as shown in FIGS. 2 and 3, is laminated or stacked alternately with the separator unit 10, and generates power by using a fuel medium supplied.

Specifically, the membrane electrode assembly 20 generates electrical power by chemically reacting the supplied hydrogen and oxygen. The MEA 20 is held integrally by a frame 24 with an anode 22 and a cathode 23 facing each other with an electrolyte membrane interposed therebetween. The membrane electrode assembly 20 is generally referred to as a MEA (membrane electrode assembly). The electrolyte membrane 21 may, for example, be made from a solid polymer material, and is formed in a thin plate. As the solid polymer material, for example, a fluorine-based resin is used that has an excellent electrical conductivity in the wet state by conducting hydrogen ions.

The anode 22 is constituted by stacking an electrode catalyst layer, a water-repellent layer, and a gas diffusion layer, and is formed in a thin plate and slightly smaller in size than the electrolyte membrane 21. The cathode 23 is constituted by stacking an electrode catalyst layer, a water-repellent layer, and a gas diffusion layer, and is formed in a thin plate shape with the same size as the anode 22. The electrode catalyst layers of the anode 22 and the cathode 23 contain an electrode catalyst carrying a catalyst component and a polymer electrolyte on a conductive substrate. The gas diffusion layers of the anode 22 and the cathode 23, for example, is formed from a carbon cloth that is woven with yarns of carbon fibers having sufficient gas diffusion property and electrical conductivity, carbon paper or carbon felt.

The frame 24 holds together the outer peripheries of the stacked electrolyte membrane 21, the anode 21, and the cathode 23. The frame 24, for example, is made up of a resin having an electrical insulating property, and is formed by the same external shape as the external shape of the outer peripheral portion of the separator unit 10. The frame 24 has, at one longitudinal end thereof, openings for through holes which correspond to an anode gas supply inlet 24a, a cooling fluid supply port 24b, and a cathode gas supply inlet 24c, respectively. Similarly, the frame 24, at the other longitudinal end thereof, forms openings for through holes which correspond to a cathode gas discharge port 24d, a cooling fluid discharge port 24a, and an anode gas discharge port 24f.

The membrane electrode assembly 20 and the separator unit 10 need to be alternately stacked in a state of being sealed to each other. Therefore, the outer peripheries of the adjacent membrane electrode assembly 20 and the separator unit 10 are sealed by a sealing member. As sealing member, for example, a thermosetting resin may be used. The thermosetting resin, for example, may be selected from phenol resin, epoxy resin, unsaturated polyester, or the like.

The deformation absorbing member 30 is shown in FIGS. 2 to 6, and is stacked between the anode side separator 11 and the cathode side separator 12 so as to absorb the deformation of each of the stacked members of the fuel cell 1.

More specifically, the deformation absorbing member 30 deforms by itself to absorb the manufacturing errors of projections which form flow channels of fuel gas and cooling water on the anode side separator 11 and the cathode side separator 12 during assembly of the fuel cell 1. Further, the deformation absorbing member 30 absorbs by deforming by itself during operation of the fuel cell 1 a deformation in the stacking direction X due to thermal expansion of the separator unit 10 and a deformation in the stacking direction X due to the expansion of the membrane electrode assembly 20 by absorbing the medium supplied thereto.

Therefore, a plurality of separator units 10 and the membrane electrode assemblies 20 may be alternately stacked so as to achieve a close contact with each other over a high pressure.

As the plurality of the separator units 10 and the membrane electrode assemblies 20 are alternately stacked in closer contact with each other, the conduction resistance through these is lowered. Thus, it is possible to improve the power generation efficiency.

The deformation absorbing member 30 is formed by a substrate 31 corresponding to the thin metal plate having electric conductivity and a plurality of standing or erected pieces 32 formed in a grid or zigzag shape on one surface 31a of the substrate 31. The erected piece 32 is formed by punching the one surface 31a of the substrate 31 into a U shape and subsequently being erected with the punched portion from the punched out hole 31b. Since the erected piece 32 has a cantilevered beam structure with respect to the substrate 31, it is provided with a resiliently deformable spring function. The erected piece 32, as shown in FIG. 3, is brought into contact with the anode side separator 11 at a free end 32b of the tip side extending from a fixed end 32a on the fixed end side provided on the one surface 31a of the substrate 31. As shown in FIGS. 4, 5, the erected piece 32 is formed in a rectangular shape with the width of the fixed end 32a on the fixed end side measured the same size as the width of the free end 32b on the tip end side extending along the one circulation direction Y from the fixed end 32a. The plurality of the erected pieces 32 are formed with aligning the direction of the fixed ends 32. "W" illustrated in FIG.4 indicates a flow path of the cooling water. The cooling water flows along the one direction Y and the other circulation direction Z while bypassing the erected pieces 32.

Here, one erected piece 32M is disposed different in relative position by a half pitch to the other erected piece 32N adjacent in the one circulation direction Y and the other circulation direction Z. That is, a plurality of erected pieces 32 is formed in a zigzag or staggered manner with respect to one surface 31a of the substrate 31. Such a configuration corresponds to the protruding portions of the absorbing member for absorbing the variation of the in-plane distribution of the stress caused by the deformation along the stacking direction X of the stacked members.

As shown in FIGS. 1 and 2, the housing 100 integrally holds a plurality of separator units 10, membrane electrode assemblies 20, and deformation absorbing members 30 stacked alternately.

The housing 100 includes a pair of end plates 101 and 102, a pair of current collector plates 103 and 104, a pair of fastening plates 106, a pair of reinforcing plates 107, and a screw 108.

As shown in FIG. 2, the pair of end plates 101 and 102 sandwiches and urges the pair of current collector plates 103, 104. The pair of current collector plates 103 and 104 is disposed on both ends of a plurality of stacked separator units 10, membrane electrode assemblies 20, and the deformation absorbing members 30. The outer shape of the pair of end plates 101 and 102, with the exception of some of the shapes, is the same as the outer shape of the membrane electrode assembly 20 with increased thickness. The pair of end plates 101 and 102, for example, is formed from a metal and is provided with an insulating material in a portion contacting the pair of the current corrector plates 103, 104. Further, out of the pair of the end plates 101, 102, only the end plate 101 is opened at a longitudinal end to form through holes corresponding to the anode gas supply port 101a, cooling fluid supply port 101b, and a cathode gas supply port 101c. Similarly, only the end plate 101 is opened at the other longitudinal end to form through holes corresponding to a cathode gas discharge port 101d, cooling fluid discharge port 101a, and an anode gas discharge port 101f. The pair of end plates 101, 102 has openings of through-hole 101j, 102j for insertion of the protruding portions 103i, 104i formed with the pair of the current collector plates 103, 104.

The pair of current collector plates 103 and 104 pulls out externally power generated in the membrane electrode assembly 20 through the separator unit 10 and the deformation absorbing member 30. A pair of current collector plates 103 and 104, as shown in FIG. 2, is disposed on both ends of a plurality of stacked sets of the separator units 10, the membrane electrode assemblies 20 and the deformation absorbing members 30. That is, the pair of current collector plates 103 and 104 is disposed adjacent the inner side of the pair of current collector plates 103 and 104. The outer shape of the pair of current collector plates 103 and 104, with the exception of some of the shapes, is the same as the outer shape of the membrane electrode assembly 20 that is slightly thicker in thickness. Out of the pair of current collector plates 103 and 104, the current collector plate 103 only is opened at its one longitudinal end with through holes corresponding to the anode gas supply port 103a, the cooling fluid supply port 103b, and the cathode gas supply port 103c. Similarly, only the current collector plate 103 is opened at its other end with through holes corresponding to the cathode gas discharge port 103d, cooling fluid discharge port 103e, and the anode gas discharge port 103f.

A pair of current collector plates 103 and 104 has a collector portion 103h and 104h in the center. The collector portions 103h and 104h are, for example, made of a conductive material, such as dense carbon which does not pass through gas and is formed in thin plate of slightly smaller size than the outer shape of the anode 22 and the cathode 23. The collector portions 103h and 104h are in contact with the outermost layer of the plurality of stacked membrane electrode assemblies 20. The collector portions 103h and 104h are arranged with electrically conductive protruding portions 103i and 104i of cylindrical shape from one surface thereof. The protruding portions 103i and 104i, as shown in FIG. 2, are inserted through the through-holes 101j and 102j of the pair of end plates 101 and 102 and exposed to the outside.

A pair of fastening plates 106, for example, is made of a metal, and is formed in a plate shape. The pair of fastening plates 106 holds the pair of end plates 101 and 102 from both sides in the longitudinal direction so as to face each other. A pair of reinforcing plates 107, for example, is made of a metal, and is formed in an plate shape more elongated than the pair of fastening plates 106. The pair of reinforcing plates 107 holds the pair of end plates 101 and 102 from both ends in the lateral direction so as to face each other. A plurality of screws 108 fix the pair of fastening plates 106 and the pair of reinforcing plates 107 to the pair of end plates 101 and 102.

According to the first embodiment described above, operation effects are produced by the following configurations.

The deformation absorbing member 30 is used by being stacked between an anode side separator 11 and a cathode side separator 12 that are assembled in pairs, and intended to absorb deformation of each of stacked members of the fuel cell (for example, separator unit 10 composed of the anode side separator 11 and the cathode side separator 12 and membrane electrode assembly 20). The deformation absorbing member 30 is provided with an absorbing portion for absorbing the variation of the in-plane distribution of the stress caused by the deformation along the stacking direction X of the laminated member.

According to this structure, by the absorbing portion of the deformation absorbing member 30, the unevenness or variation of the in-plane distribution of the stress caused by the deformation along the stacking direction X of the laminated members is absorbed so that the anode side separator 11 and the cathode side separator 12 are allowed to deform evenly in a plane crossing the stacking direction X of the laminated member surface. In other words, the amount of change in volume of the cooling water flow channel 14 provided between the anode side separator 11 and the cathode side separator 12 can be made uniform within the plane crossing with the lamination direction X of the laminated member. Therefore, it is possible due to the absorbing portion of the deformation absorbing member 30 to suppress the volume change of the cooling water between the anode side separator 11 and the cathode side separator 12 to thereby improve the circulation.

The fuel cell 1 has a deformation absorbing member 30, a separator unit 10, a membrane electrode assembly 20, and a housing 100. The deformation absorbing member 30 is made of the above configuration. The separator unit 10 has the deformation absorbing member 30 stacked between the anode side separator 11 and the cathode side separator 12. The membrane electrode assembly 20 is laminated to the separator unit 10, and generates power by using a fuel medium supplied. The housing 100 holds the deformation absorbing member 30, the separator unit 10, and the membrane electrode assembly 20 together.

According to such a fuel cell 1, since a deformation absorbing member 30 is provided with a deformation absorbing portion for absorbing the variations in the in-plane distribution of the stress caused by the deformation along the stacking direction X of the laminated member, it is possible to obtain the desired output without causing deterioration of the battery characteristics due to insufficient cooling of the membrane electrode assembly 20,.

The absorbing portion of the deformation absorbing member 30 pertaining to the first embodiment is provided with protruding portions along the stacking direction X from one surface 31a of the substrate 31 in a zigzag or grid pattern, which have deformable protruding portions (e.g. erected pieces 32). One protruding portion (corresponding to one erected piece 32M) and the other protrusion (corresponding to the other erected piece 32N) are adjacent to each other in one circulation direction Y with one being on the upstream side and the other being on the downstream side of the cooling fluid to be circulated between the anode side separator 11 and the cathode side separator 12, and positioned partly differently or shifted with respect to the other circulation direction Z crossing the one circulation direction Y.

According to this configuration, between the anode side separator 11 and the cathode side separator 12, the variation of the density with respect to the stacking direction X of the deformation absorbing member 30 may be suppressed in the one circulation direction Y along through the medium supply port and the cooling fluid discharge port as well as in the other circulation direction Z perpendicular to the one circulation direction Y. In other words, in the circulation direction Y and in the other circulation direction Z, since a plurality of protruding portions (e.g. erected pieces 32) are arranged in a grid or staggered manner, the density variation with respect to the stacking direction X of the deformation absorbing members 30 can be suppressed. As a result, a plurality of protrusions (e.g. erected pieces 32) may allow the anode side separator 11 and the cathode side separator 12 to deform uniformly in the plane consisting of the one circulation direction Y and the other circulation direction Z, without causing locally distort. Therefore, the volume change of the cooling water flow channel 14 disposed between the anode side separator 11 and the cathode side separator 12 can be made uniform in the plane consisting of the one circulation direction Y and the other circulation direction Z.

Moreover, in the deformation absorbing member 30, the protruding portion may consist of erected portion 32 of cantilevered beam, which is erected from the one surface 31a of the substrate 31.

According to this configuration, the erected piece is integrally formed with the substrate 31 and is highly reliable in that it is hardly subject to falling off from the substrate 31. Further, the erected piece may be formed by a simply configuration in that one surface 31a of the substrate 31 is punched into a U shape and the like and subsequently erected from a punched out hole 31b.

Moreover, the erected piece 32 may be set arbitrarily with its shape and the disposed position or the like with respect to one surface 31a of the substrate 31. Similarly, the erected piece 32 may be obtained by selecting the bending strength required and the material of the substrate 31 as appropriate.

### (FIRST MODIFICATION OF FIRST EMBODIMENT)

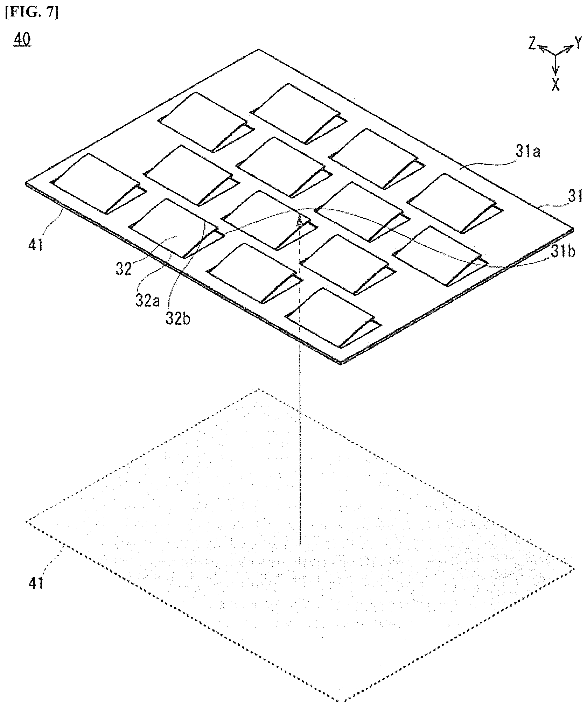

A description is given of a deformation absorbing member 40 pertaining to a first modification of the first embodiment with reference to FIG. 7.

FIG. 7 is a perspective view showing a part of the deformation absorbing member 40.

The deformation absorbing member 40 pertaining to the first modification of the first embodiment is different from the first embodiment described above in the configuration by which a plate-shaped holding member 41 is brought into contact with the other surface of the substrate 31.

In the first modification 1 of the first embodiment, with respect to the parts made of the same configuration as the first embodiment described above, the same reference numerals are used and the description thereof will be omitted.

The deformation absorbing member 40, similar to the deformation absorbing member 30, is provided with a substrate 31 corresponding to the metal thin plate having the electric conductivity and a plurality of erected pieces 32 formed in a staggered manner on the one surface 31a of the substrate 31. Moreover, the deformation absorbing member 40 is different from the deformation absorbing member 30 in that a plate-shaped holding member 41 is provided. The holding member 41 is made of a metal thin plate having electric conductivity, and is formed into the same outer shape and size as the substrate 31. The holding member 41 is in contact with the other surface side opposite to the one surface 31a of the substrate 31. The holding member 41 may be joined by laser welding or the like to the substrate 31.

According to the first modification of the first embodiment described above, the following configurations allow to exhibits the operational effects described below.

The deformation absorbing member 40 is provided with a holding member 41, in addition to the erected piece 32 which protrudes from the one surface 31a of the substrate 31. The holding member 41 is plate-shaped and abuts the other surface which is opposite to the one surface 31a of the substrate 31.

According to this structure, the other surface side of the substrate 31 is in contact with a cathode side separator 12 or anode side separator 11 via the holding member 41. That is, even when the punched out hole 31b is formed by opening the substrate 31 in a grid manner, the load received from the cathode side separator 12 or the anode side separator 11 may be dispersed uniformly by the holding member 41. Therefore, the deformation absorbing member 40 may absorb effectively the variations in-plane distribution of the stress associated with the deformation along the stacking direction of the cathode side separator 12 or anode side separator 11 without being influenced by the punching hole 31 opened.

The configuration with the holding member 41 in the above-described deformation absorbing member may be applied to all embodiments described below.

### (SECOND MODIFICATION OF FIRST EMBODIMENT)

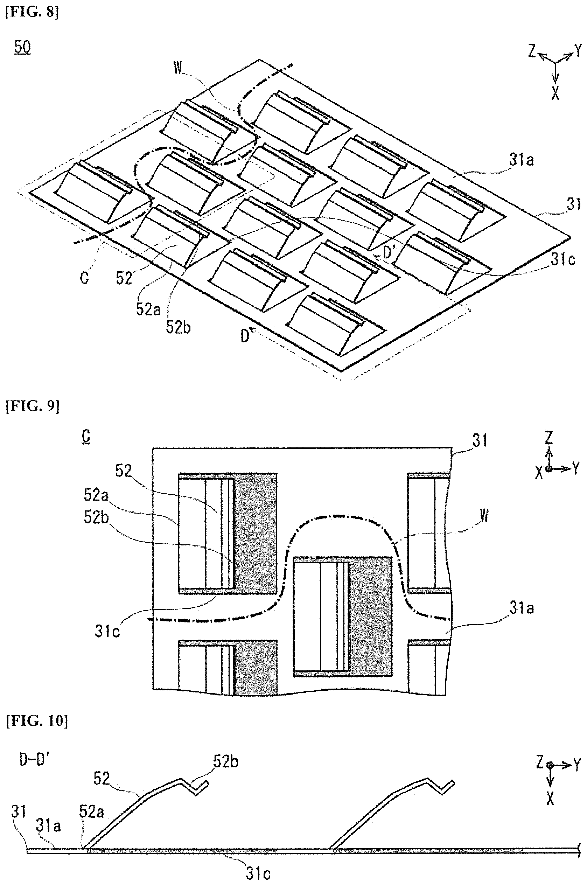

A description is now given of a deformation absorbing member 50 pertaining to a second modification of the first embodiment with reference to FIGS. 8 to 11.

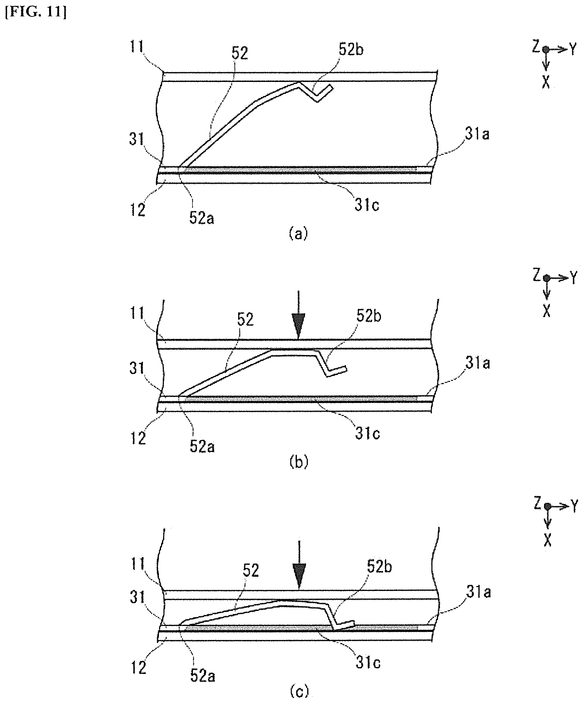

FIG. 8 is a perspective view showing a part of the deformation absorbing member 50. FIG. 9 is a plan view showing a part defined by an area C of the deformation absorbing member 50. FIG. 10 is a side view schematically showing a part of the deformation absorbing member 50 in the line D-D '. Finally, FIG. 11 is a side view schematically showing the spring characteristics of an erected piece 52 of the deformation absorbing member 50.

The deformation absorbing member 50 pertaining to the second modification of the first embodiment is different from the first embodiment described above in that, when the erected piece 52 is deformed beyond a certain range, the free end portion 52b of the erected piece 52 is configured to be in contact with a cathode side separator 12, for example.

In the second modification of the first embodiment, with respect to the parts made of the same configuration as the first embodiment described above, the same reference numerals are used and the description thereof will be omitted.

The deformation absorbing member 50, an in the case of the deformation absorbing member 30, is formed from a substrate 31 corresponding to the metal thin plate having electric conductivity and a plurality of erected pieces 52 which are formed in a grid or zigzag shape on one surface 31a of the substrate 31. The erected piece 52, similar to the erected piece 32, after one surface 31a of the substrate 31 is punched in a U shape, the punched out portion is erected from a punched out hole 31c. However, the erected piece 52 is punched out with a long dimension in the one circulation direction Y than the erected piece 32. The erected piece 52 has a cantilever structure with respect to the substrate 31, and is provided with a resiliently deformable spring function. The erected piece 52 is bent in a L shape at the tip of the free end portion 52b which extends from the fixed end portion 52a on the base side of the substrate 31. W shown in FIG. 8 is a flow path for the cooling water circulation, The cooling water flows along the one circulation direction Y and the other circulation direction Z while bypassing the erected pieces 52.

When the erected piece 52 is in a state of abutting along the direction X of the stacked member, as shown in FIG. 11A, the free end portion 52b is largely separated from the cathode side separator of 12 adjacent to the side of the fixed end portion 52a. Further, when the erected piece 52 is in a state of being pressed by the stacked member in a certain range along the stacking direction X, as shown in FIG. 11B, although the erected piece is bent and deformed, the free end portion 52b is still away from the cathode side separator 12. Then, when the erected piece 52 is in a state of being strongly pressed beyond the certain range along the stacking direction X from the stacking member, then the erected piece is greatly bent and deformed, as shown in FIG. 11C, so as to be in contact with the cathode side separator 12.

According to the second modification of the first embodiment described above, the following operational effects will be exhibited by the following configurations.

In deformation absorbing member 50, when deformed by being pressed by the stacking member (such as separator unit 10 composed of anode side separator 11 and cathode side separator 12 or membrane electrode assembly 20) beyond a predetermined range, the free end portion 52b extending along the one circulation direction Y from the fixed end portion 52a positioned on the one surface 31a of the substrate 31 is brought into contact with either the cathode side separator 12 or the anode side separator 11.

According to this structure, even when the erected piece 52 is pressed excessively beyond a certain range from the stacked member, the free end portion 52b which is subject to deformation by bending, is brought into contact with the anode side separator 11 or the cathode side separator to thereby suppress the excessive movement of the stacked member.

### (SECOND EMBODIMENT)

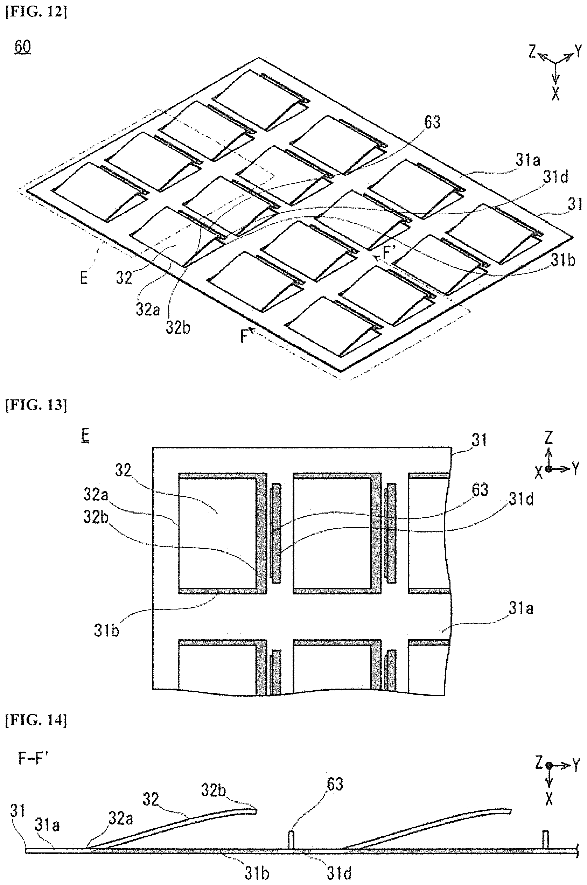

A description is given of a deformation absorbing member 60 pertaining to a second embodiment with reference to FIGS. 12 to 14.

FIG. 12 is a perspective view showing a part of the deformation absorbing member. FIG. 13 is a plan view showing a part defined by an area F of the deformation absorbing member. FIG. 14 is a side view schematically showing a part of the deformation absorbing member in line F-F'.

The deformation absorbing member 60 pertaining to the second embodiment is different from the first embodiment in the configuration for regulating the deformation of the stacked member within a certain range by a regulating portion (e.g. stopper 63).

In the second embodiment, with respect to the parts made of the same configuration as the first embodiment described above, the same reference numerals are used and the description thereof will be omitted.

The deformation absorbing member 60, similarly to the deformation absorbing member 30, has a plurality of protruding and deformable erected pieces 32 along the stacking direction X from one surface 31a of the substrate 31 in a grid pattern. The deformation absorbing members 60 are different from the deformation absorbing member 30, and a plurality of erected pieces 32 are arranged to align linearly with respect to the one circulation direction Y. Here, the deformation absorbing member 60 is different from the deformation absorbing member 30 in that a restricting portion for restricting the deformation of the stacked member is provided within a certain range. A stopper 63 corresponds to the restricting portion, for example. Further, the stacked member correspond to a separator unit 10 consisting of an anode side separator 11 and cathode side separator 12 or the membrane electrode assembly 20.

The stopper 63, after punching the one surface 31a of the substrate 31 in a rectangular shape, is formed by erecting from a punched out hole 31d. The stopper 63 is, similar to the erected piece 32, has a cantilever structure relative to the substrate 31. On the other hand, the stopper 63 is different from the erected piece 32 in extending vertically in the stacking direction, i.e., perpendicular to the one circulation direction Y and the other circulation direction Z. Also, the stopper 63 is shorter than the erected piece 32 before deformation with respect to the stacking direction X. The stopper 63 is provided on the substrate 31 so as to be adjacent to the erected piece 32 along the one circulation direction Y. By anchoring by the deformable erected piece 32 the stacked member being pressed, the deformation along the stacking direction X is restricted within a predetermined range. Since the stopper 63 is standing vertically along the stacking direction X, when it is pressed along the stacking direction X from the lamination member, the stopper 63 itself will be prevented from being elastically deformed.

According to the second embodiment described above, the operational effects may be exhibited by the following configurations.

In the deformation absorbing member 60, the absorbing portion is provided with a protruding portion (for example, erected piece 32) and a restricting portion (for example, stopper 63). The protruding portions (for example, erected pieces 32) protrude in a grid pattern from the one surface 31a of the substrate 31 along the stacking direction X and are deformable. The restricting portion (for example, stopper 63) protrudes from the one surface 31a in the stacking direction X and is dimensioned shorter in the stacking direction X as compared to the protruding portion before deformation (for example, erected piece 32). Here, the restricting portion (for example, stopper 63) restricts within a predetermined range the deformation in the stacking direction X of the stacked member (for example, separator 12 consisting of anode side separator 11 and the cathode side separator 12 or membrane electrode assembly 20).

According to this structure, by the deformation of the protruding portions (for example, erected piece 32) which are pressed by deformation of the laminated member (for example, standing piece 32),when the deformation amount of the protruding portion reaches a predetermined value, the stacked member comes into contact with the restricting portion (for example, stopper 63) so that it is possible to restrict the deformation of the stacked member within a certain range. Therefore, even the erected piece 32 is excessively pressed by the stacked member, it is possible to suppress by the stopper 63 the deformation of the stacked member within a predetermined range. That is, the stopper 63may reduce the amount of change in volume of the cooling water flow channel 14 provided between the anode side separator 11 and cathode side separator 12 without causing the anode-side separator 11 and the cathode side separator 12 to be deformed more than necessary,.

Further, the restricting portion (e.g. stopper 63) can restrict the stacked member (for example, separator unit 10 consisting of anode side separator 11 and cathode side separator 12, or membrane electrode assembly 20) from being deformed without being deformed by itself.

According to this structure, for example, by allowing the stopper 63 to erect upright along the stacking direction X, when pressed by the stacked member along the stacking direction, excessive deformation of the stacked member may be suppressed and damage to the stacked member may be prevented.

### (FIRST MODIFICATION OF SECOND EMBODIMENT)

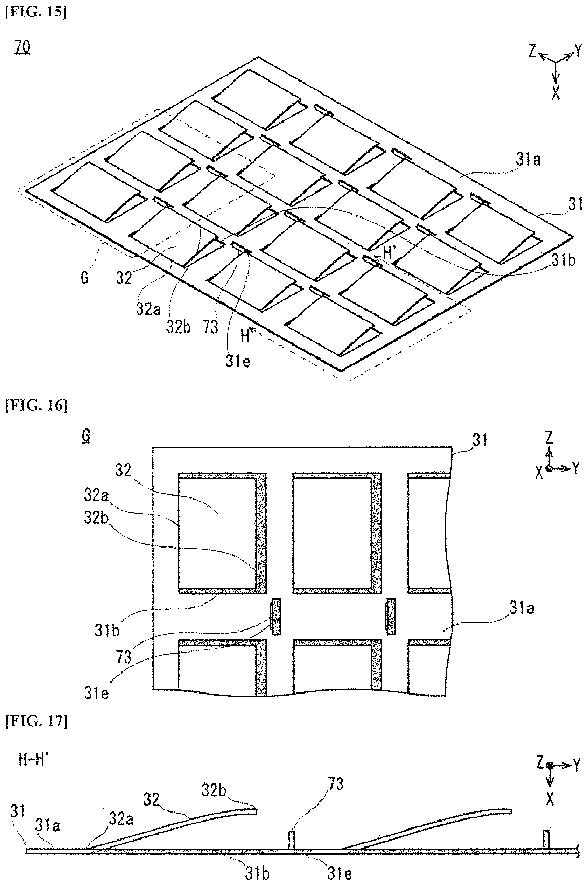

A description of a deformation absorbing member 70 pertaining to a first modification of the second embodiment is now made with reference to FIGS. 15 to 17.

FIG. 15 is a perspective view showing a part of the deformation absorbing member 70. FIG. 16 is a plan view showing a part of the deformation absorbing member 70 defined by an area G in FIG. 15. FIG. 17 is a side view schematically showing a part of the deformation absorbing member 70 in the line H-H ' in FIG. 15.

The deformation absorbing member 70 pertaining to the first modification of the second embodiment is different from the second embodiment in that the restricting portion (for example, stoppers 73) is configured not to overlap with the protruding portion (for example, erected piece 32) along the circulation direction Y.

In the first modification of the second embodiment, with respect to the parts made of the same configuration as the second embodiment described above, the same reference numerals are used and the description thereof will be omitted.

The stopper 73, similar to the stopper 63, after punching the one surface 31a of the substrate 31 in a rectangular shape, is formed by erecting a punched out strip from a punched out hole 31e. The stopper 73 is, similar to the stopper 63, has a cantilevered beam structure relative to the substrate 31 and is erected vertically along the stacking direction X. Also, the stopper 73, similar to the stopper 63, is shorter than the erected piece 32 before deformation with respect to the stacking direction X. Here, the stopper 63 is provided on the substrate 31, different from the stopper 63, so as not to overlap with the erected piece 32 along the circulation direction Y. By engaging with the stacked member being pressed and the erected piece 32 being deformed, the stopper 63 restricts the deformation of the stacked member along the stacking direction X within a predetermined range. Since the stopper stands upright along the vertical direction, when pressed by the stacked member along the stacking direction X, the stopper 73 itself will be prevented from being elastically deformed.

According to the first modification of the second embodiment described above, the operational effects are exhibited by the following configurations.

In deformation absorbing member 70, the restricting portion (for example, stopper 73) does not overlap with the protruding portion (for example, erected piece 32).along the circulation direction Y

According to this structure, the variation of the density of the deformation absorbing member 70 with respect to the stacking direction X between the anode side separator 11 and the cathode side separator 12 may be suppressed in the one circulation direction Y along a flow path from the fluid supply port to the cooling fluid discharge port. In other words, in the circulation direction Y, since the stopper 73 and the erected piece 32 are alternately arranged so as to be adjacent to each other in an oblique direction, it is possible to suppress the variation in density of the deformation absorbing member 70 in the calculation direction Y and the other circulation direction Z.

### (SECOND MODIFICATION OF SECOND EMBODIMENT)

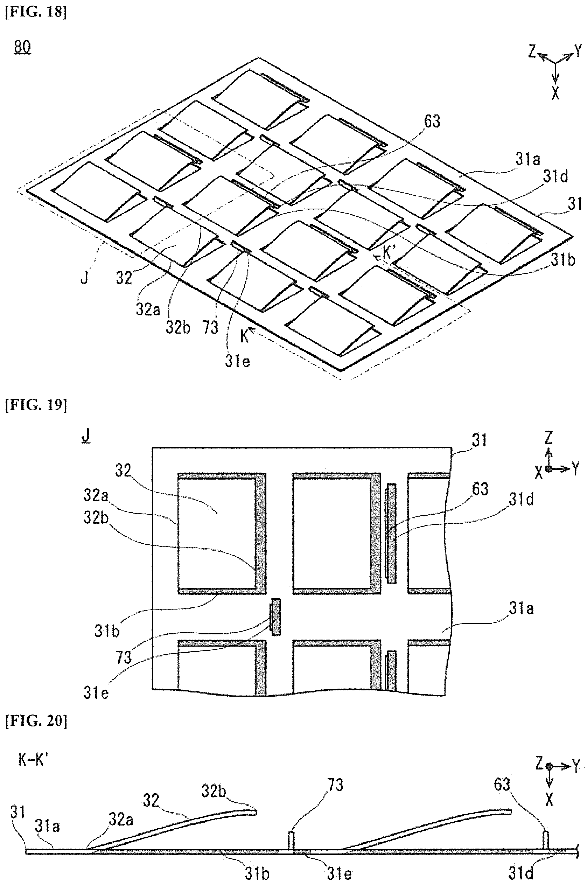

A description is given of a deformation absorbing member 80 according to a second modification of the second embodiment with reference to FIGS. 18 to 20.

FIG. 18 is a perspective view showing a part of the deformation absorbing member 80. FIG. 19 is a plan view showing a part of the deformation absorbing member 80 defined by area J in FIG. 18. FIG. 20 is a side view schematically showing a part of the deformation absorbing member 80 in line K-K' in FIG. 18.

The deformation absorbing member 80 pertaining to a second modification of the second embodiment is different from the first modification of the second embodiment in that steppers 63 and stoppers 73 are in a staggered manner.

In the second modification of the second embodiment, with respect to the parts made of the same configuration as the second embodiment or the first modification of the second embodiment described above, the same reference numerals are used and the description thereof will be omitted.

In the deformation absorbing member 80, a combined structure is proposed in which deformation absorbing members 60 and deformation absorbing members 70 are combined. The deformation absorbing members 60 are arranged with a plurality of stoppers 63 in every other rows along the circulation line Y. Further, the deformation absorbing members 70 are arranged with a plurality of stoppers 73 in every other rows along the circulation line. Further, in the deformation absorbing member 30, the stoppers 63 and stoppers 73 are alternately arranged.

According to the second modification of the second embodiment described above, the operational effects are exhibited by the following configurations.

In the deformation absorbing member 80, a first restricting portion (for example, stopper 63) which overlaps with the protruding portion (for example, erected piece 32) along the circulation direction Y, and a second restricting potion (for example, stopper 73) which does not overlap with the protruding portion (for example, erected piece 32) are formed alternately with respect to the circulation direction Y.

According to this structure, the variation of the density of the deformation absorbing member 80 with respect to the stacking direction X between the anode side separator 11 and the cathode side separator 12 may be suppressed uniformly in the one circulation direction Y along a flow path from the fluid supply port to the cooling fluid discharge port and in the other circulation direction Z extending perpendicular to the one direction X. In other words, in the circulation direction Y as well as in the other circulation direction Z, since the stoppers 73 and the erected pieces 32 are alternately arranged in a staggered manner, it is possible to suppress the variation in density of the deformation absorbing member 80 in the stacking direction X.

### (THIRD MODIFICATION OF SECOND EMBODIMENT)

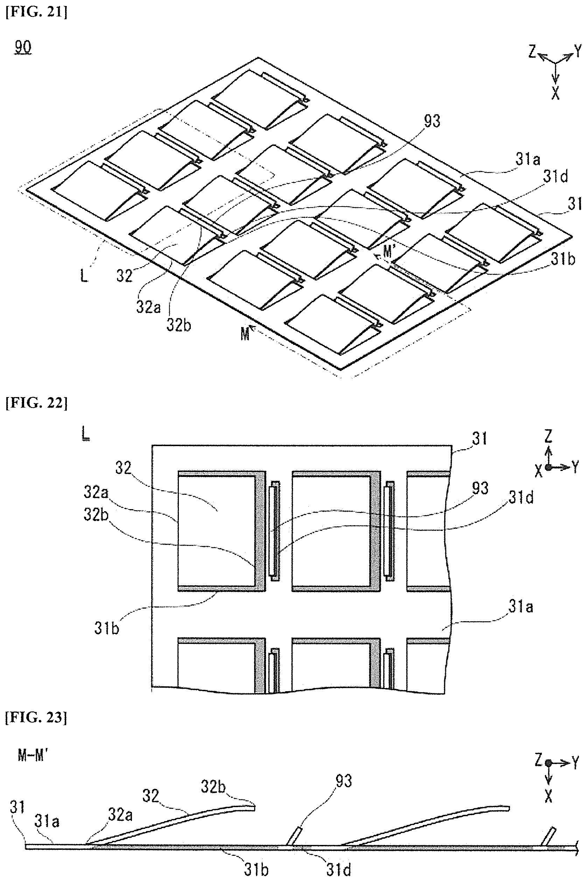

A description is given of a deformation absorbing member 90 pertaining to a third deformation absorbing member 90 with reference to FIGS. 21 to 23.

FIG. 21 is a perspective view showing a part of the deformation absorbing member 90. FIG. 22 is a plan view showing a part of the deformation absorbing member 90 in an area L in FIG. 21. FIG. 23 is a side view schematically showing a part of the deformation absorbing member 90 in line M-M' in FIG. 21.

The deformation absorbing member 90 pertaining to the third modification of the second embodiment is different from the second embodiment in a configuration in which a restricting portion (for example, stopper 93) is deformed when pressed by a stacked member.

In the third modification of the second embodiment, for those of the same configuration as the second embodiment described above, using the same reference numerals and the description thereof will be omitted as described above.

The stopper 93, similar to the stopper 63 of the deformation absorbing member 60, after punching the one surface 31a of the substrate 31 in a rectangular shape, is formed by erecting from a punched out hole 31d. The stopper 93 is, similar to the stopper 63, has a cantilevered beam structure relative to the substrate 31. Unlike the stopper 63, however, the stopper 93 is disposed so as to cross the one circulation direction Y and inclined with respect to the stacking direction X. Further, the stopper 93 is inclined with respect to the stacking direction X in the same direction as the erected piece 32. Also, the stopper 93 is shorter than the erected piece 32 before deformation with respect to the stacking direction X. By engaging the stacked member which is pressed while deforming the erected piece 32, the stopper 93 restricts the deformation of the stacked member along the stacking direction X within a predetermined range. Since the stopper is erected and inclined in the stacking direction X, when pressed by the stacked member along the stacking direction X, the stopper 73 itself will be elastically deformed.

According to the third modification of the second embodiment described above, the operational effects are exhibited by the following configuration.

In deformation absorbing member 90, the restricting portion (for example, stopper 93) can restrict the stacked member (for example, separator unit 10 consisting of anode side separator 11 and cathode side separator 12, or membrane electrode assembly 20) from being deformed while being deformed elastically.

According to this structure, for example, by allowing the stopper 93 to stand inclined in the stacking direction X, the stopper 93 can be elastically deformed when pressed along the stacking direction X from the stacked member. Accordingly, the stacked member is restricted in deformation within a predetermined range by the stopper 93 while the stacked member is pressed and stopper 93 will not be excessively urged so as to prevent damage. That is, while the deformations of the anode side separator 11 and the cathode side separator 12 will be reduced, it is possible to reduce the amount of change in volume of the cooling water flow channel 14 provided between the anode side separator 11 and cathode side separator 12.

In addition, the invention is susceptible to various modifications based on the configuration described in Claims. The scope of the present invention may cover those modifications as well.

For example, it is conceivable that, on one side of the membrane electrode assembly 20, a separator unit 10 (anode side separator 11 and cathode side separator 12) which sandwiches a deformation absorbing member 30, and, on the other side of the membrane electrode assembly 20, a single separator which does not clamp the deformation absorbing member 30 is disposed. That is, only on either one side of the double-side along the stacking direction X of the membrane electrode assembly 20, a separator unit 10 (anode side separator 11 and cathode side separator 12) may be disposed.

Moreover, the deformation absorbing member 30 is not limited to such a structure in which an elastically deformable erected piece 32 having a spring function is provided on the substrate 31. Rather, a convex portion with a stretchy may be bonded to the substrate 31 to thereby absorb the deformation of the stacked member.

Furthermore, it is possible to combine the first embodiment and the second embodiment. Thus, for example, a plurality of erected pieces 32 are formed in a staggered manner or pattern on the substrate 31, and it is possible to form the stopper 63 with respect to the substrate 31.

Similarly, for example, the stopper 73 of the deformation absorbing member 70 pertaining to the first modification of the second embodiment may be inclined with respect to the stacking direction X, similarly to the stopper 93 of the deformation absorbing member 90 pertaining to the third modification of the second embodiment, so as to be deformed when pressed from the stacked member.

Furthermore, the erected piece 32 is not to be limited to a rectangular shape, but, for example, by rendering tapering the width of the free end 32b which extends from the fixed end 32a along the one circulation direction Y, the erected piece may be configured in a tongue shape.

Moreover, the deformation absorbing member 30 is not limited to such a configuration in which the erected piece 32 is brought into contact with the anode side separator 11. The erected piece 32 may be configured to abut against the cathode side separator 12.

### DESCRIPTION OF REFERENCE NUMERALS

1 fuel cell
10 separator unit
11 anode side separator
12 a cathode side separator
13 anode gas flow channel
14 cooling water flow channel
15 cathode gas channel
20 membrane electrode assembly
21 electrolyte membrane
22 anode
23 cathode
24 frame
30,40,50,60,70,80,90 deformation absorbing member
31 substrate
31a one surface
31b , 31c , 31d , 31e punched out hole
32, 52 erected piece (corresponding to protruding portion)
32M one erected piece (corresponding to protruding portion)
32N other erected piece
32a , 52a fixed end portion
32b , 52b free end portion
41 holding member
63,73,93 stopper (corresponding to restricting portion)
100 housing
101, 102 end plate
103, 104 collector plate,
106 fastening plate
107 reinforcing plate
108 screw
11a, 12a , 24a , 101a, 103a anode gas supply port
11b, 12b, 24b, 101b, 103b cooling fluid supply port
11c, 12c, 24c, 101c , 103c cathode gas supply port
11d, 12d, 24d, 101d, 103d cathode gas discharge port
11e, 12e, 24e, 101e, 103e cooling fluid discharge port
11f, 12f, 24f, 101f, 103f anode gas discharge port
11g, 12g flow channel
101j, 102j through-hole
103h, 104h collector portion
103i, 104i protruding portion
A , C , E , G , J, L area
W circulation channel
X stacking direction
Y one circulation direction
Z other circulation direction.

## Claims

1. A separator unit (10) comprising a deformation absorbing member (30), an anode side separator (11) and a cathode side separator (12), the deformation absorbing member (30) stacked between the anode side separator (11) and the cathode side separator (12) assembled in pairs so as to absorb each deformation of stacked members of a fuel cell, the deformation absorbing member (30) comprising:
an absorbing portion for absorbing the variation of the in-plane distribution of the stress associated with deformation of the stacked members along the stacking direction,
wherein the absorbing portion includes a plurality of deformable protruding portions (32) which protrude in a grid along the stacking direction from one surface of a substrate (31), the substrate (31) being in direct contact with one of the anode side separator (11), the cathode side separator (12) or a plate-shaped member (41), wherein the plate-shaped member is in direct contact with another surface of the substrate (31), which faces the one surface, the plate-shaped member also being in direct contact with one of the anode side separator (11) and the cathode side separator (12),
wherein one protruding portion (32M) and another protruding portion (32N) are located adjacent to each other with respect to upstream side and downstream side of one circulation direction of a cooling medium to be circulated between the anode side separator (11) and the cathode side separator (12), while being partly different in positions with respect to the other circulation direction crossing the one circulation direction such that the protruding portions (32) are arranged in a staggered manner on the one surface of the substrate (31),
wherein the protruding portion (32) consists of a cantilevered beam portion which is erected from the one surface of the substrate (31), the cantilevered beam portion having a fixed end attached to the one surface of the substrate (31) and a free end that is separated apart from the one surface of the substrate (31) and extends along the one circulation direction from the fixed end,
wherein, when deformed by being pressed by the stacking members beyond a predetermined range, the free end is brought into contact with the one of the cathode side separator (12), the anode side separator (11) and the plate-shaped member (41).

2. A separator unit (10) comprising a deformation absorbing member (30), an anode side separator and a cathode side separator, the deformation absorbing member (30) stacked between the anode side separator (11) and the cathode side separator (12) assembled in pairs so as to absorb each deformation of stacked members of a fuel cell, the deformation absorbing member (30) comprising:
an absorbing portion for absorbing the variation of the in-plane distribution of the stress associated with deformation of the stacked members along the stacking direction,
wherein a protruding portion (32M) and another protruding portion (32N) are located adjacent to each other with respect to upstream side and downstream side of one circulation direction of a cooling medium to be circulated between the anode side separator (11) and the cathode side separator (12), while being partly different in positions with respect to the other circulation direction crossing the one circulation direction such that the protruding portions (32) are arranged in a staggered manner on one surface of a substrate (31),
wherein a plurality of the absorbing portions are provided including deformable protruding portions (32) protruding in a grid along the stacking direction from one surface of the substrate (31), wherein the protruding portions (32) are arranged in a staggered manner on the one surface of the substrate (31), and restricting portions (63, 73) protruding from the one surface of the substrate (31) along the stacking direction and dimensioned short in the stacking direction for restricting deformation of the stacked member within a predetermined range along the stacking direction, the substrate (31) being in contact with one of the anode side separator (11) and the cathode side separator (12).

3. The deformation absorbing member (30) as claimed in claim 2, wherein the restricting portions (73) do not overlap with the protruding portions (32) along the one circulation direction.

4. The deformation absorbing member (30) as claimed in claim 2, wherein the restricting portions includes first restricting portions (63) that overlap with the protruding portions (32) along the one circulation direction and second restricting portions (73) that do not overlap with the protruding portions (32) along the one circulation direction, the first restricting portions (63) and the second restricting portions (73) beingalternately formed along the one circulation direction.

5. The deformation absorbing member (30) as claimed in any one of claims 2 to 4, wherein the restricting portions (63, 73) restricts the deformation of the stacked member without being subject to deformation by itself when pressed from the stacked member.

6. The deformation absorbing member (30) as claimed in any one of claims 2 to 4, wherein the restricting portions (63, 73) restricts the deformation of the stacked member while being elastically deformed by itself when pressed from the stacked member.

7. A fuel cell, comprising:
the separator unit (10) deformation as claimed in any one of claims 1 to 6,
a membrane electrode assembly stacked on the separator unit for generating power using a fuel medium supplied thereto; and
a housing which holds the deformation absorbing member (30), the separator unit, and the membrane electrode assembly integrally.

## Patentansprüche

1. Separatoreinheit (10) mit einem Verformungsabsorptionselement (30), einem anodenseitigen Separator (11) und einem kathodenseitigen Separator (12), wobei das Verformungsabsorptionselement (30) zwischen dem anodenseitigen Separator (11) und dem kathodenseitigen Separator (12), die paarweise angeordnet sind, zum Absorbieren jeder Verformung gestapelter Elemente einer Brennstoffzelle gestapelt ist, wobei das Verformungsabsorptionselement (30) umfasst:
einen Absorptionsbereich zum Absorbieren der Veränderung der in der Ebene liegenden Verteilung der Spannung, die mit einer Verformung der gestapelten Elemente entlang der Stapelrichtung verbunden ist,
wobei der Absorptionsbereich eine Vielzahl verformbarer Vorsprungbereiche (32) aufweist, die in einem Raster entlang der Stapelrichtung von einer Oberfläche eines Substrats (31) vorragen, wobei das Substrat (31) in direktem Kontakt mit dem anodenseitigen Separator (11), dem kathodenseitigen Separator (12) oder einem plattenförmigem Element (41) steht, wobei das plattenförmige Element in direktem Kontakt mit einer anderen Oberfläche des Substrats (31) steht, die der einen Oberfläche zugewandt ist, wobei das plattenförmige Element zudem in direktem Kontakt mit dem anodenseitigen Separator (11) oder dem kathodenseitigen Separator (12) steht,
wobei ein Vorsprungbereich (32M) und ein weiterer Vorsprungbereich (32N) in Bezug auf eine Stromaufwärtsseite und Stromabwärtsseite einer Zirkulationsrichtung eines Kühlmediums, das zwischen dem anodenseitigen Separator (11) und dem kathodenseitigen Separator (12) zirkulieren soll, nebeneinander angeordnet sind, wobei diese in Bezug auf die andere Zirkulationsrichtung, welche die eine Zirkulationsrichtung kreuzt, teilweise unterschiedlich positioniert sind, sodass die Vorsprungbereiche (32) auf der einen Oberfläche des Substrats (31) gestaffelt angeordnet sind,
wobei der Vorsprungbereich (32) aus einem Kragträgerbereich zusammengesetzt ist, der von der einen Oberfläche des Substrats (31) errichtet ist, wobei der Kragträgerbereich ein festes Ende, das an der einen Oberfläche des Substrats (31) befestigt ist, und ein freies Ende aufweist, das von der einen Oberfläche des Substrats (31) getrennt ist und sich entlang der einen Zirkulationsrichtung vom festen Ende erstreckt,
wobei das freie Ende, wenn es durch Zusammenpressen durch die Stapelelemente über einen vorgegebenen Bereich hinaus verformt ist, mit dem kathodenseitigen Separator (12), dem anodenseitigen Separator (12) oder dem plattenförmigen Element (41) in Kontakt gebracht ist.

2. Separatoreinheit (10) mit einem Verformungsabsorptionselement (30), einem anodenseitigen Separator und einem kathodenseitigen Separator, wobei das Verformungsabsorptionselement (30) zwischen dem anodenseitigen Separator (11) und dem kathodenseitigen Separator (12), die paarweise angeordnet sind, zum Absorbieren jeder Verformung gestapelter Elemente einer Brennstoffzelle gestapelt ist, wobei das Verformungsabsorptionselement (30) umfasst:
einen Absorptionsbereich zum Absorbieren der Veränderung der in der Ebene liegenden Verteilung der Spannung, die mit einer Verformung der gestapelten Elemente entlang der Stapelrichtung verbunden ist,
wobei ein Vorsprungbereich (32M) und ein weiterer Vorsprungbereich (32N) in Bezug auf eine Stromaufwärtsseite und Stromabwärtsseite einer Zirkulationsrichtung eines Kühlmediums, das zwischen dem anodenseitigen Separator (11) und dem kathodenseitigen Separator (12) zirkulieren soll, nebeneinander angeordnet sind, wobei diese in Bezug auf die andere Zirkulationsrichtung, welche die eine Zirkulationsrichtung kreuzt, teilweise unterschiedlich positioniert sind, sodass die Vorsprungbereiche (32) auf einer Oberfläche eines Substrats (31) gestaffelt angeordnet sind,
wobei eine Vielzahl der Absorptionsbereiche vorgesehen ist, die verformbare Vorsprungbereiche (32), die in einem Raster entlang der Stapelrichtung von einer Oberfläche des Substrats (31) vorragen, wobei die Vorsprungbereiche (32) auf der einen Oberfläche des Substrats (31) gestaffelt angeordnet sind, und Begrenzungsbereiche (63, 73) umfassen, die von der einen Oberfläche des Substrats (31) entlang der Stapelrichtung vorragen und in der Stapelrichtung zum Begrenzen einer Verformung des gestapelten Elements innerhalb eines vorgegebenen Bereichs entlang der Stapelrichtung kurz bemessen sind, wobei das Substrat (31) in Kontakt mit dem anodenseitigen Separator (11) oder dem kathodenseitigen Separator (12) steht.

3. Verformungsabsorptionselement (30) nach Anspruch 2, wobei sich die Begrenzungsbereiche nicht mit den Vorsprungbereichen (32) entlang der einen Zirkulationsrichtung überschneiden.

4. Verformungsabsorptionselement (30) nach Anspruch 2, wobei die Begrenzungsbereiche erste Begrenzungsbereiche (63), die sich mit den Vorsprungbereichen (32) entlang der einen Zirkulationsrichtung überschneiden, und zweite Begrenzungsbereiche (73) umfassen, die sich nicht mit den Vorsprungbereichen (32) entlang der einen Zirkulationsrichtung überschneiden, wobei die ersten Begrenzungsbereiche (63) und die zweiten Begrenzungsbereiche (73) entlang der einen Zirkulationsrichtung abwechselnd ausgebildet sind.

5. Verformungsabsorptionselement (30) nach einem der Ansprüche 2 bis 4, wobei die Begrenzungsbereiche (63, 73) die Verformung des gestapelten Elements beschränken, ohne selbst einer Verformung ausgesetzt zu sein, wenn sie vom gestapelten Element zusammengepresst sind.

6. Verformungsabsorptionselement (30) nach einem der Ansprüche 2 bis 4, wobei die Begrenzungsbereiche (63, 73) die Verformung des gestapelten Elements beschränken, während sie beim Zusammenpressen durch das gestapelte Element selbst elastisch verformt werden.

7. Brennstoffzelle, umfassend:
die Separatoreinheit (10) nach einem der Ansprüche 1 bis 6,
eine Membranelektrodenanordnung, die auf der Separatoreinheit zum Erzeugen von Energie unter Verwendung eines ihr zugeführten Brennstoffmediums gestapelt ist; und
ein Gehäuse, welches das Verformungsabsorptionselement (30), die Separatoreinheit und die Membranelektrodenanordnung einstückig hält.

## Revendications

1. Unité séparateur (10) comprenant un élément d'absorption de déformation (30), un séparateur côté anode (11) et un séparateur côté cathode (12), l'élément d'absorption de déformation (30) étant empilé entre le séparateur côté anode (11) et le séparateur côté cathode (12) assemblés par paires de sorte à absorber chaque déformation des éléments empilés d'une pile à combustible, l'élément d'absorption de déformation (30) comprenant :
une partie d'absorption pour absorber la variation de la répartition dans le plan de la contrainte associée à la déformation des éléments empilés le long de la direction d'empilement,
dans laquelle la partie d'absorption comporte une pluralité de parties saillantes déformables (32) qui font saillie sous forme de grille le long de la direction d'empilement à partir d'une première surface d'un substrat (31), le substrat (31) étant en contact direct avec l'un du séparateur côté anode (11), du séparateur côté cathode (12) et d'un élément en forme de plaque (41), où l'élément en forme de plaque est en contact direct avec une autre surface du substrat (31), qui fait face à la première surface, l'élément en forme de plaque étant également en contact direct avec l'un du séparateur côté anode (11) et du séparateur côté cathode (12),
dans laquelle une première partie saillante (32M) et une autre partie saillante (32N) sont situées de manière adjacente l'une à l'autre par rapport au côté amont et au côté aval d'une première direction de circulation d'un agent de refroidissement à faire circuler entre le séparateur côté anode (11) et le séparateur côté cathode (12), tout en ayant des positions partiellement différentes par rapport à l'autre direction de circulation croisant la première direction de circulation de sorte que les parties saillantes (32) soient agencées en quinconce sur la première surface du substrat (31),
dans laquelle la partie saillante (32) consiste en une partie de montant en porte-à-faux qui se dresse à partir de la première surface du substrat (31), la partie de montant en porte-à-faux ayant une extrémité fixe fixée à la première surface du substrat (31) et une extrémité libre qui est séparée de la première surface du substrat (31) et s'étend le long de la première direction de circulation à partir de l'extrémité fixe,
dans laquelle, lorsqu'elle est déformée en étant pressée par les éléments d'empilement au-delà d'une plage prédéterminée, l'extrémité libre est mise en contact avec l'un du séparateur côté cathode (12), du séparateur côté anode (11) et de l'élément en forme de plaque (41).

2. Unité séparateur (10) comprenant un élément d'absorption de déformations (30), un séparateur côté anode et un séparateur côté cathode, l'élément d'absorption de déformation (30) étant empilé entre le séparateur côté anode (11) et le séparateur côté cathode (12) assemblés par paires de sorte à absorber chaque déformation des éléments empilés d'une pile à combustible, l'élément d'absorption de déformation (30) comprenant :
une partie d'absorption pour absorber la variation de la répartition dans le plan de la contrainte associée à la déformation des éléments empilés le long de la direction d'empilement,
dans laquelle une première partie saillante (32M) et une autre partie saillante (32N) sont situées de manière adjacente l'une à l'autre par rapport au côté amont et au côté aval d'une première direction de circulation d'un agent de refroidissement à faire circuler entre le séparateur côté anode (11) et le séparateur côté cathode (12), tout en ayant des positions partiellement différentes par rapport à l'autre direction de circulation croisant la première direction de circulation de sorte que les parties saillantes (32) soient agencées en quinconce sur une première surface d'un substrat (31),
dans laquelle une pluralité des parties d'absorption sont prévues, comportant des parties saillantes déformables (32) faisant saillie sous forme de grille le long de la direction d'empilement à partir d'une première surface du substrat (31), où les parties saillantes (32) sont agencées en quinconce sur la première surface du substrat (31), et des parties de limitation (63, 73) faisant saillie à partir de la première surface du substrat (31) le long de la direction d'empilement et dimensionnées de manière à être courtes dans la direction d'empilement pour limiter la déformation de l'élément empilé dans une plage prédéterminée le long de la direction d'empilement, le substrat (31) étant en contact avec l'un du séparateur côté anode (11) et du séparateur côté cathode (12).

3. Élément d'absorption de déformation (30) tel que revendiqué dans la revendication 2, dans lequel les parties de limitation (73) ne se chevauchent pas avec les parties saillantes (32) le long de la première direction de circulation.

4. Élément d'absorption de déformation (30) tel que revendiqué dans la revendication 2, dans lequel les parties de limitation comportent des premières parties de limitation (63) qui se chevauchent avec les parties saillantes (32) le long de la première direction de circulation et des deuxièmes parties de limitation (73) qui ne se chevauchent pas avec les parties saillantes (32) le long de la première direction de circulation, les premières parties de limitation (63) et les deuxièmes parties de limitation (73) étant formées en alternance le long de la première direction de circulation.

5. Élément d'absorption de déformation (30) tel que revendiqué dans l'une quelconque des revendications 2 à 4, dans lequel les parties de limitation (63, 73) limitent la déformation de l'élément empilé sans être soumises à la déformation par elles-mêmes lorsqu'elles sont pressées à partir de l'élément empilé.

6. Élément d'absorption de déformation (30) tel que revendiqué dans l'une quelconque des revendications 2 à 4, dans lequel les parties de limitation (63, 73) limitent la déformation de l'élément empilé tout en étant déformées élastiquement par elles-mêmes lorsqu'elles sont pressées à partir de l'élément empilé.

7. Pile à combustible, comprenant :
l'unité séparateur (10) tel que revendiqué dans l'une quelconque des revendications 1 à 6,
un ensemble membrane-électrodes empilé sur l'unité séparateur pour générer de l'énergie en utilisant un milieu combustible fourni à celle-ci ; et
un boîtier qui maintient, d'un seul tenant, l'élément d'absorption de déformation (30), l'unité séparateur, et l'ensemble membrane-électrodes.
